# FASCICULE DE BREVET EUROPEEN

(11) **EP 0 985 577 B1**
(45) Date de publication et mention de la délivrance du brevet: **09.04.2003**
(21) Numéro de dépôt: 99401924.8
(22) Date de dépôt: 28.07.1999
(51) Int. Cl.: B60Q 1/076

(54) **Dispositif de commande d'une partie mobile d'un projecteur de véhicule automobile**
Steuerungseinrichtung eines verstellbaren Teils eines Kfz-Scheinwerfers
Control device for a movable part of a vehicle headlamp

(30) Priorité: 08.09.1998 FR 9811203
(43) Date de publication de la demande: 15.03.2000
(73) Titulaire: VALEO VISION, 93012 Bobigny Cédex (FR)
(72) Inventeur: Natchoo, Philippe, 77220 Tournan en Brie (FR)
(74) Mandataire: Lemaire, Marc

(56) Documents cités:
- DE-A- 19 521 270
- DE-C- 4 420 779
- GB-A- 2 283 564

## Description

La présente invention concerne un dispositif de commande de la position d'une partie mobile, d'un projecteur de véhicule automobile.

Plus particulièrement, elle concerne un dispositif de commande qui comprend une tige d'actionnement d'axe X, dont une extrémité est destinée à être reliée à ladite partie mobile de manière à être libre en rotation autour de l'axe X, et dont une autre extrémité est destinée à être reliée à un moyen de déplacement automatique positionné à l'intérieur du boîtier du projecteur, et dans lequel il est prévu d'une part un moyen d'entraînement en rotation manuel de ladite tige d'actionnement, monté sur le boîtier de projecteur de manière à être accessible depuis l'extérieur du projecteur, et d'autre part un moyen de transmission positionné à l'intérieur du boîtier du projecteur et assujetti audit moyen d'entraînement en rotation manuel coopérant avec la tige d'actionnement pour lui transmettre le mouvement de rotation produit par ledit moyen d'entraînement en rotation manuel.

L'invention trouve une application particulièrement avantageuse pour régler l'inclinaison en site ou en azimut d'un réflecteur d'un projecteur de véhicule automobile.

On connaît déjà de l'état de la technique, des dispositifs de commande dans lesquels il est prévu un seul moyen d'entraînement, constitué par un correcteur à moteur électrique d'entraînement en rotation dont le carter est vissé à l'intérieur du boîtier du projecteur.

Dans ce cas, le réglage de la position de la partie- mobile du projecteur s'effectue uniquement de manière automatique par la commande du correcteur électrique situé à l'intérieur du boîtier de projecteur.

On connaît également un dispositif de commande dont le seul moyen d'entraînement est un correcteur à moteur électrique d' entraînement en rotation, monté à l'extérieur du boîtier du projecteur.

Dans ce cas, la tige d'actionnement du dispositif de commande sort à l'extérieur du boîtier du projecteur pour coopérer avec des moyens de transmission associés au moteur électrique d'entraînement en rotation du correcteur électrique situé à l'extérieur du boîtier du projecteur.

Dans un dispositif de commande de ce type, il peut être prévu un moyen de déplacement manuel de ladite tige d'actionnement intégré au correcteur électrique situé à l'extérieur du boîtier de projecteur.

Toutefois, un tel projecteur est relativement encombrant en partie arrière et nécessite une place de montage importante dans la carrosserie du véhicule, place qui n'est pas toujours disponible.

De plus, lorsque les abords du correcteur électrique ne sont pas facilement accessibles, du fait qu'il est placé dans une région de la carrosserie difficile d'accès, l'opérateur peut très difficilement accéder au moyen de réglage manuel situé en arrière du correcteur électrique.

Enfin, on connaît du document FR 2 516 031, un dispositif de commande qui comprend un moyen de déplacement du type hydraulique apte à déplacer automatiquement en translation par l'intermédiaire d'un poussoir actionné par différence de pression, une tige d'actionnement comprenant une partie d'extrémité filetée visée dans un écrou solidaire d'un réflecteur de projecteur. La tige d'actionnement comprend également à son autre extrémité une partie d'entraînement en rotation à section carrée suivie d'une tête sphérique montée dans un logement correspondant du poussoir du moyen de déplacement automatique. Ledit dispositif comporte en outre un moyen d'entraînement en rotation manuel monté sur le boîtier de projecteur et constitué par un bouton d'entraînement à rotation portant un engrenage engrénant avec une roue d'engrenage portée par un manchon à section carrée dans lequel est enfilée la partie d'entraînement en rotation à section carrée de la tige d'actionnement. Ainsi, la rotation du bouton permet l'entraînement en rotation de la partie d'entraînement à section carrée de la tige d'actionnement qui reste fixe en translation longitudinale et le vissage/dévissage de l'écrou porté par le réflecteur sur la partie filetée de la tige pour provoquer un déplacement axial dudit écrou, et par suite, le déplacement axial du réflecteur.

Un tel agencement de dispositif de commande nécessite le montage par vissage de la tige d'actionnement sur le réflecteur, ce qui entraîne un aménagement spécial prévu à cet effet sur le réflecteur. Le montage de l'ensemble dispositif de commande/réflecteur est en outre relativement long, ce qui entraîne nécessairement un surcoût de fabrication du projecteur.

Par rapport à l'état de la technique précité, la présente invention propose un nouveau dispositif de commande du type défini précédemment dont l'agencement autorise un montage simple, rapide et économique tel qu'un cloquage sur la partie mobile du projecteur.

Plus précisément, dans le dispositif de commande selon l'invention, la tige d'actionnement est fixe en translation par rapport à ladite partie mobile, et coopère par vissage avec une sortie fixe en translation du moyen de déplacement automatique, de sorte que l'entraînement en rotation de la tige d'actionnement provoque son déplacement longitudinal selon l'axe X.

Ainsi, dans le dispositif de commande selon l'invention, l'accès au moyen de réglage manuel par le dessus du projecteur est avantageux lorsque les abords du moyen de déplacement automatique (correcteur) ne sont pas accessibles, soit qu'il est interne au boîtier de projecteur, soit qu'il est externe au boîtier mais placé dans une région non accessible de la carrosserie.

En outre, dans le dispositif de commande selon l'invention, la tige d'actionnement peut être montée par un moyen de montage rapide du type clippage ou cloquage, sur la partie mobile du projecteur. Ici, le positionnement de la partie mobile est réalisé par ledit dispositif de commande dans tous les cas en faisant varier par translation de la tige la distance prévue entre la sortie du dispositif de commande et l'extrémité de la tige d'actionnement montée sur ladite partie mobile.

Selon un mode de réalisation du dispositif de commande selon l'invention, ledit moyen de transmission comporte un manchon s'étendant selon l'axe X dont une extrémité vient en prise avec la tige d'actionnement, et dont l'autre extrémité est montée sur une partie fixe du projecteur, de manière à être fixe en translation et mobile en rotation autour de l'axe X.

En outre, selon ce mode de réalisation du dispositif de commande conforme à l'invention, ledit moyen de transmission comprend une roue d'engrenage destinée à coopérer avec un pignon d'un bouton d'actionnement manuel monté sur le boîtier de projecteur de manière à émerger à l'extérieur dudit boîtier.

Selon une caractéristique avantageuse du dispositif de commande conforme à l'invention, le manchon et la roue d'engrenage forment un ensemble monobloc.

Selon une autre caractéristique particulièrement avantageuse du dispositif de commande selon l'invention, ledit moyen de transmission comprend des languettes flexibles aptes à coopérer avec la tige d'actionnement, chaque languette présentant une flexibilité suffisante pour permettre en cas d'efforts importants, l'écartement de ladite languette par rapport à ladite tige d'actionnement, et un retour élastique de celle-ci sur ladite tige d'actionnement.

Cet agencement particulier précité du moyen de transmission du dispositif de commande selon l'invention, permet à celui-ci de débrayer lorsque la tige d'actionnement, sous l'action dudit moyen d'entraînement en rotation manuel, arrive dans une position extrême de butée vers l'avant ou vers l'arrière du projecteur.

Selon un mode de réalisation préférentiel de l'invention, les languettes flexibles sont formées dans une partie d'extrémité du manchon.

La description qui va suivre en regard des dessins annexés, donnés à titre d'exemples non limitatifs, fera bien comprendre en quoi consiste l'invention et comment elle est peut être réalisée.

Sur les dessins annexés:
- la figure 1 est une vue schématique en perspective de côté d'un mode de réalisation du dispositif de commande conforme à l'invention,
- la figure 2 est une vue schématique en coupe longitudinale du dispositif de commande de la figure 1 monté dans le boîtier d'un projecteur de véhicule automobile, avec sa tige d'actionnement en position vers l'arrière du projecteur, et
- la figure 3 est une vue en coupe longitudinale d'un autre mode de réalisation du dispositif de commande selon l'invention monté dans le boîtier d'un projecteur de véhicule automobile, avec sa tige d'actionnement en position vers l'avant du projecteur.

Sur les figures, on a représenté un dispositif de commande de la position d'un organe mobile, tel qu'un réflecteur (non représenté), d'un projecteur de véhicule automobile (non représenté).

Un tel dispositif de commande permet de régler de façon manuelle et de façon automatique l'inclinaison de la ligne de visée d'un projecteur en modifiant l'orientation en site ou bien en azimut du réflecteur.

Ce dispositif de commande comporte une tige d'actionnement 100 qui s'étend selon un axe X et qui comporte à une extrémité une tête sphérique 101 destinée à s'engager par cloquage dans un logement complémentaire prévu dans la partie arrière d'un réflecteur (non représenté) pour être reliée audit réflecteur de façon fixe en translation par rapport au réflecteur et libre en rotation par rapport à l'axe X.

La tige d'actionnement 100 comporte une autre extrémité 102 qui coopère par vissage avec une sortie 201 d'un moyen de déplacement automatique, ici un premier moyen d'entraînement en rotation 200 positionné ici à l'intérieur du boîtier 10 du projecteur.

Plus particulièrement, l'extrémité 102 de la tige d'actionnement 100 est conformée en un manchon creux pourvu d'un filetage interne vissé sur une extrémité filetée 202 d'une tige 201 qui s'étend selon l'axe X dans le prolongement de la tige d'actionnement 100 et qui forme la sortie rotative et fixe en translation selon l'axe X d'un correcteur électrique 200 pourvu de moyens de transmission et d'un moteur électrique d'entraînement en rotation coopérant avec lesdits moyens de transmission. L'ensemble des moyens de transmission et du moteur électrique est monté à l'intérieur d'un carter fixé ici à l'intérieur du boîtier 10 du projecteur de véhicule automobile.

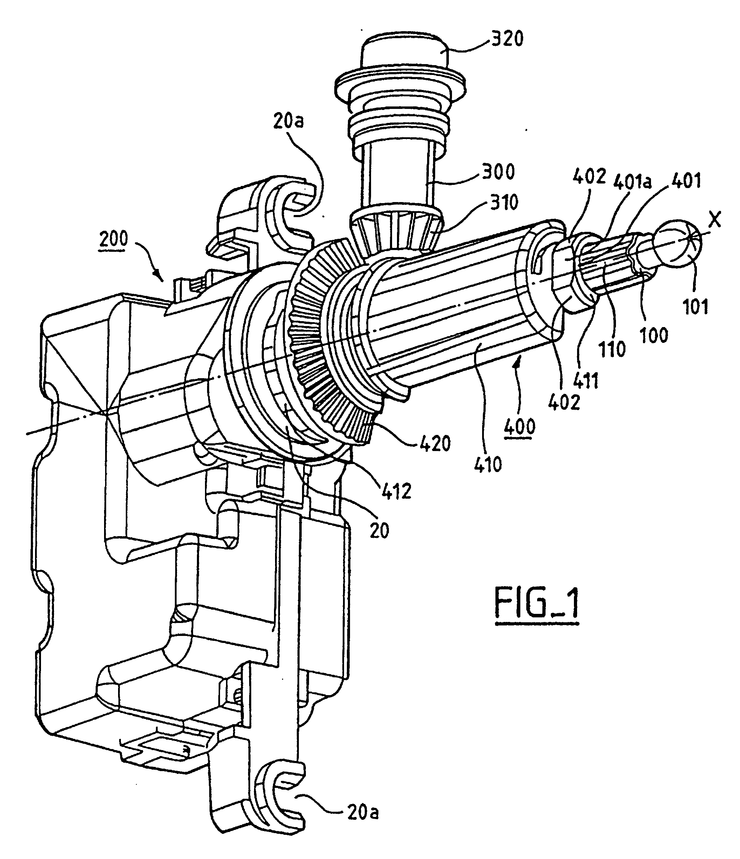

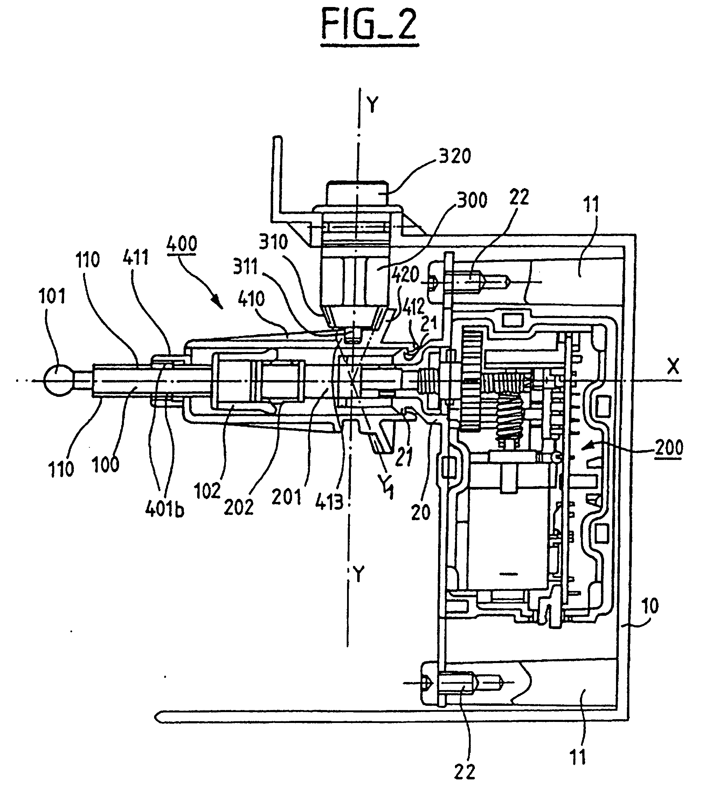

Selon le mode de réalisation représenté sur les figures 1 et 2, le moteur électrique d'entraînement en rotation 200 est un moteur micropoline. Le carter du correcteur électrique est monté sur une paroi de montage 20 fixée à l'aide de vis 22 vissées au travers d'orifices 20a de la paroi 20 dans des tourelles 11 s'étendant à l'intérieur du boîtier 10 du projecteur à partir d'une de ses parois.

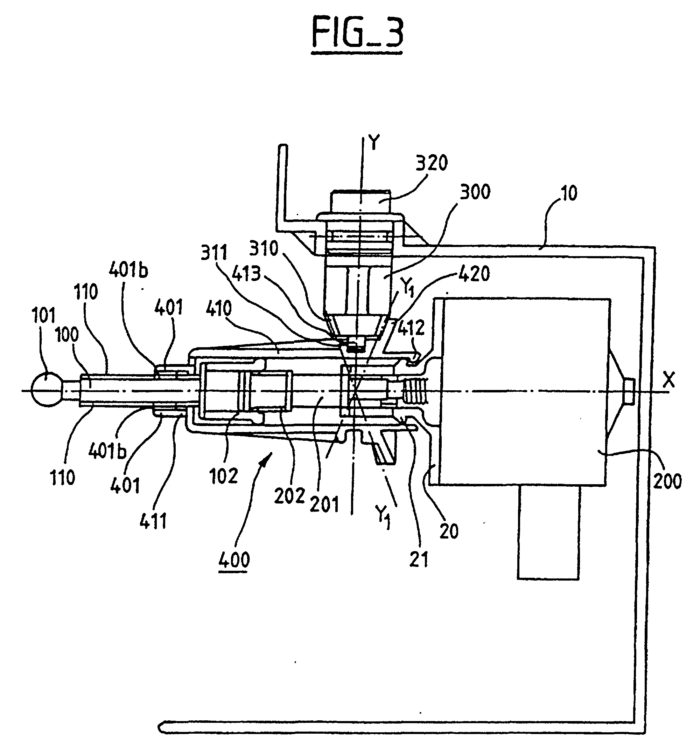

Comme le montrent les figures 2 et 3, la tige rotative 201 sort du carter de correcteur, en traversant un appendice de guidage et de maintien de ladite tige 201, formé dans la paroi de montage 20.

A cet effet, l'appendice s'étend selon l'axe X et présente un diamètre tel qu'il est ajusté sur la tige de sortie rotative 201 du correcteur tout en autorisant bien entendu, sa rotation autour de l'axe X.

Selon le mode de réalisation représenté sur la figure 3, le premier moyen d'entraînement en rotation 200 est un moteur électrique d'entraînement pas à pas positionné à l'intérieur du boîtier 10 du projecteur de véhicule automobile.

Ce moteur d'entraînement pas à pas comporte également en sortie, une tige rotative 201 fixe en translation selon l'axe X, qui s'étend selon l'axe X dans le prolongement de la tige d'actionnement 100, et qui comporte une extrémité 202 portant un filetage vissé dans le filetage prévu à l'extrémité 102 de la tige d'actionnement 100.

Le carter du moteur d'entraînement pas à pas 200 présente une paroi 20 au travers de laquelle sort la tige rotative 201.

L'entraînement en rotation autour de l'axe X de ladite tige d'actionnement 100 provoque son déplacement longitudinal selon l'axe X par vissage et dévissage sur le filetage 202 de la sortie 201 du premier moyen d'entraînement en rotation monté dans ce cas typique à l'intérieur du boîtier de projecteur.

La tige d'actionnement 100 est réalisée par injection et moulage de matière plastique.

Le dispositif de commande selon l'invention comporte également un deuxième moyen d'entraînement en rotation manuel 300 monté sur le boîtier 10 du projecteur de manière à être accessible depuis l'extérieur du boîtier de projecteur, et un moyen de transmission 400 positionné à l'intérieur du boîtier 10 de projecteur et apte à transmettre à la tige d'actionnement 100 le mouvement d'entraînement en rotation produit par ledit deuxième moyen d'entraînement en rotation manuel 300 de façon à provoquer, lorsque le premier moyen d'entraînement en rotation 200 est inactif, le déplacement longitudinal de ladite tige 100 selon l'axe X, par vissage et dévissage de celle-ci sur ledit filetage 202 fixe.

Ici, le deuxième moyen d'entraînement en rotation manuel est un bouton d'actionnement manuel 300 monté sur le boîtier 10 du projecteur suivant un axe Y perpendiculaire à l'axe X, de manière à ce qu'une de ses extrémités 320 émerge à l'extérieur dudit boîtier 10.

Cette extrémité 320 par laquelle on actionne ledit bouton 300 peut présenter comme le montre la figure 1 une paroi externe de préhension à pans coupés.

Le bouton d'actionnement manuel 300 comporte à son autre extrémité un pignon 310.

Bien entendu, le montage du bouton d'actionnement manuel 300 sur le boîtier 10 du projecteur est réalisé de manière à autoriser sa rotation autour de l'axe Y tout en assurant une étanchéité entre l'intérieur et l'extérieur du boîtier.

Cette étanchéité est réalisée à l'aide d'un joint d'étanchéité monté entre le bouton 300 et la paroi du boîtier, au niveau de i'orifice de montage dudit bouton.

En outre, ledit moyen de transmission 400 comporte un manchon 410 s'étendant selon l'axe X dont une extrémité 411 vient en prise avec la tige d'actionnement 100 et dont l'autre extrémité 412 est montée sur une partie fixe du projecteur, ici ladite paroi de montage 20.

Le manchon 410 est fixe en translation selon l'axe X et mobile en rotation autour dudit axe X.

Ledit moyen de transmission 400 comprend également une roue d'engrenage 420 destinée à coopérer avec le pignon 310 du bouton d'actionnement manuel 300.

A cet effet, la roue d'engrenage 420 s'étend un axe Y1 oblique par rapport à l'axe Y, l'inclinaison dudit axe Y1 correspondant à l'inclinaison des dents du pignon 310 du bouton d'actionnement 300.

Ici, le manchon 410 et la roue d'engrenage 420 forment une seule pièce réalisée par exemple, en polyamide chargée de fibres de verre ou en polyacétal.

Bien entendu, on peut prévoir selon un autre mode de réalisation que la roue d'engrenage et le manchon forment deux pièces assemblées.

Comme le montrent plus particulièrement les figures, la partie arrière de la tige d'actionnement 100 portant son extrémité 102 pourvue du filetage, est destinée à être insérée à l'intérieur du manchon 410.

De plus, la tige 201 formant la sOnie rotative du premier moyen d'entraînement en rotation 200 s'étend selon l'axe X à l'intérieur du manchon de manière à venir coopérer par vissage avec l'extrémité 102 de la tige d'actionnement.

Le montage du manchon 410 sur la partie fixe 20 est réalisé par encliquetage d'une dent 412 sur un rebord correspondant 21 de ladite partie de montage 20.

L'autre extrémité 411 du manchon 410 est pourvue de languettes flexibles 401 (voir figure 1) aptes à coopérer avec la tige d'actionnement 100.

Chaque languette 401 présente une flexibilité suffisante pour permettre en cas d'efforts importants, l'écartement de ladite languette 400 et son retour élastique sur ladite tige d'actionnement 100.

Plus particulièrement, chaque languette flexible 401 formée dans la partie d'extrémité 411 dudit manchon 410, s'étend longitudinalement selon une direction transversale à l'axe X de la tige d'actionnement 100 et comporte sur sa face interne destinée à venir en contact avec la tige d'actionnement 100 une saillie 401 b apte à se positionner dans une rainure 110 longitudinale prévue sur la surface extérieure de la partie cylindrique de la tige d'actionnement 100.

Selon un mode de réalisation, on peut prévoir trois languettes 401 disposées en triangle.

Chaque languette est liée à ses deux extrémités à des parties fixes 402 de ladite extrémité 411 du manchon 410.

Ces parties fixes 402 sont des languettes rigides qui s'étendent parallèlement à l'axe X. Les languettes flexibles 401 transversales à l'axe X ne sont liées au corps cylindrique du manchon 410 que par l'intermédiaire des languettes rigides de sorte qu'il existe une lumière transversale entre chaque languette flexible transversale liée aux dites languettes rigides longitudinales et le bord du corps cylindrique du manchon 410.

En outre, chaque languette flexible 401 comporte sur sa face externe à l'opposée de sa saillie interne 401 b un renfoncement 401a en forme de portion de cylindre d'axe parallèle à l'axe X.

Les saillies en forme de pointe desdites languettes flexibles permettent d'assurer la solidarisation en rotation du manchon avec la tige d'actionnement.

Le renfoncement en forme de portion de cylindre prévu sur la face externe de chacune des languettes flexibles 401, permet de donner à chaque languette flexible la flexibilité suffisante pour permettre en cas d'efforts importants, l'écartement desdites languettes et un retour élastique de celles-ci dans les rainures adjacentes de la tige d'actionnement.

Ainsi, lorsque le premier moyen d'entraînement électrique 200 du dispositif de commande est inactif, on peut déplacer la tige d'actionnement 100 en tournant le bouton 300 qui coopère avec la roue d'engrenage 420 de façon à visser et dévisser via ledit manchon 410 ladite tige d'actionnement 100 sur le filetage 202 de la sortie 201 fixe.

Lorsque la tige d'actionnement arrive en bout de course dans une position extrême avant ou extrême arrière, si l'on continue à tourner le bouton 300 autour de son axe Y de rotation, on exerce alors via la roue d'engrenage 420, un effort important sur le manchon 410 et donc sur les languettes flexibles qui assurent la coopération du manchon 410 avec la tige d'actionnement. Ces languettes forment alors ici un système de débrayage qui permet d'éviter la transmission de cet effort important à la tige d'actionnement, en sautant d'une rainure de la tige d'actionnement à l'autre.

Il est à noter que le positionnement de l'extrémité 310 du bouton d'actionnement manuel 300 par rapport à la roue d'engrenage 420, est assuré à l'aide d'un téton de centrage 311 faisant saillie de l'extrémité 310 du bouton 300 et venant se positionner dans un logement de centrage 413 formé en saillie sur la surface extérieure du manchon 410.

La position de ce logement de centrage 413 est prévue de manière que lorsque le téton de centrage 311 est inséré dans ce logement, la denture du pignon 310 du bouton coopère parfaitement d'engrenage 420.

Bien entendu, la présente invention n'est nullement limitée aux modes de réalisation décrits et représentés, mais l'homme du métier pourra y apporter toute variante conforme à son esprit.

Par exemple, on pourra prévoir un autre système de débrayage dudit moyen de transmission, par exemple, des languettes flexibles qui s'étendent longitudinalement selon l'axe X de la tige d'actionnement et reliées entre elles par des languettes rigides transversales audit axe X.

De manière générale, on pourra prévoir tout autre système flexible qui a tendance à se déformer lorsqu'on lui applique une contrainte importante pour éviter de transmettre cet effort à la tige d'actionnement.

En outre, selon une autre variante non représentée, on peut prévoir que le moyen de déplacement automatique soit monté à l'extérieur du boîtier de projecteur, la tige d'actionnement et le moyen de transmission étant toujours positionnés à l'intérieur du boîtier de projecteur. Dans ce cas, le montage du dispositif de commande peut être réalisé par un système de montage à baïonnette, prévu suivant l'axe X en arrière de la roue d'engrenage coopérant avec le bouton d'entraînement manuel, et avant du moyen de déplacement automatique.

## Revendications

1. Dispositif de commande de la position d'une partie mobile d'un projecteur de véhicule automobile, comprenant une tige d'actionnement (100) d'axe X, dont une extrémité (101) est destinée à être reliée à ladite partie mobile de manière à être libre en rotation autour de l'axe X, et dont une autre extrémité (102) est destinée à être reliée à un moyen de déplacement automatique (200) et dans lequel il est prévu d'une part un moyen d'entraînement en rotation manuel (300) de ladite tige d'actionnement (100), monté sur le boîtier (10) de projecteur de manière à être accessible depuis l'extérieur du projecteur, et d'autre part un moyen de transmission (400) positionné à l'intérieur du boîtier (10) du projecteur et assujetti audit moyen d'entraînement en rotation manuel (300) coopérant avec la tige d'actionnement (100) pour lui transmettre le mouvement de rotation produit par ledit moyen d'entraînement en rotation manuel (300), dans lequel la tige d'actionnement (100) est fixe en translation par rapport à ladite partie mobile, **caractérisé en ce que** la tige d'actionnement (100) présente une extrémité qui coopère par vissage avec une sortie rotative (201) fixe en translation du moyen de déplacement automatique (200) de sorte que l'entraînement en rotation de ladite tige d'actionnement provoque son déplacement longitudinal selon l'axe X.

2. Dispositif de commande selon la revendication 1, **caractérisé en ce que** ledit moyen de transmission (400) comporte un manchon (410) s'étendant selon l'axe X, dont une extrémité (411) vient en prise avec la tige d'actionnement (100), et dont l'autre extrémité (412) est montée sur une partie fixe (20) du projecteur, de manière à être fixe en translation et mobile en rotation autour de l'axe X.

3. Dispositif selon l'une des revendications 1 ou 2, **caractérisé en ce que** ledit moyen de transmission (400) comprend une roue d'engrenage (420) destinée à coopérer avec un pignon (310) d'un bouton d'actionnement manuel (300) monté sur le boîtier(10) de projecteur de manière à émerger à l'extérieur dudit boîtier (10).

4. Dispositif selon les revendications 2 et 3, **caractérisé en ce que** le manchon (410) et la roue d'engrenage (420) forment un ensemble monobloc.

5. Dispositif selon l'une des revendications 1 à 4, **caractérisé en ce que** le moyen de transmission (400) est une pièce réalisée en matière plastique.

6. Dispositif selon l'une des revendications 1 à 5, **caractérisé en ce que** ledit moyen de transmission (400) comprend des languettes flexibles (401) aptes à coopérer avec ladite tige d'actionnement (100), chaque languette (401) présentant une flexibilité suffisante pour permettre en cas d'efforts importants, l'écartement de ladite languette (400) par rapport à ladite tige d'actionnement (100), et un retour élastique de celle-ci sur ladite tige d'actionnement (100).

7. Dispositif selon la revendication 6, **caractérisé en ce que** chaque languette flexible (401) s'étend longitudinalement selon une direction transversale à l'axe X de la tige d'actionnement (100), et comporte sur sa face interne destinée à venir en contact avec la tige d'actionnement (100), une saillie (401b) apte à se positionner dans une rainure (110) prévue sur la surface extérieure de la tige d'actionnement (100).

8. Dispositif selon l'une des revendications 6 ou 7, **caractérisé en ce que** chaque languette flexible (401) comporte sur sa face externe un renfoncement (401 a) en forme de portion de cylindre.

9. Dispositif selon l'une des revendications 6 à 8, dans sa dépendance à l'une des revendications 2 à 5, **caractérisé en ce que** les languettes flexibles (101) sont formées dans une partie d'extrémité (411) dudit manchon (410).

10. Dispositif selon l'une quelconque des revendications précédentes, **caractérisé en ce que** le moyen de déplacement automatique (200) comprend un moteur électrique d'entraînement en rotation.

## Claims

1. Device for controlling the position of a movable part of a motor-vehicle headlamp, comprising an actuating rod (100) with an axis X, one end (101) of which is intended to be coupled to the said movable part in such a way as to be free in rotation about the axis X and another end (102) of which is intended to be coupled to an automatic displacement means (200), and in which a manual rotary drive means (300) for the said actuating rod (100) is provided, on the one hand, this being mounted on the headlamp housing (10) in such a way as to be accessible from the outside of the headlamp, and a transmission means (400) positioned within the housing (10) of the headlamp is provided, on the other hand, and is subjected to the said manual rotary drive means (300) co-operating with the actuating rod (100) so as to transmit to it the rotary motion produced by the said manual rotary drive means (300), in which the actuating rod (100) is fixed in translation relative to the said movable part, **characterised in that** the actuating rod (100) has an end which cooperates by screwing with a rotary output (201), fixed in translation, of the automatic displacement means (200) in such a way that the rotary driving of the said actuating rod brings about its longitudinal displacement along the axis X.

2. Control device according to Claim 1, **characterised in that** the said transmission means (400) comprises a sleeve (410) extending along the axis X, one end (411) of which enters into engagement with the actuating rod (100), and the other end (412) of which is mounted on a fixed part (20) of the headlamp in such a way as to be fixed in translation and capable of rotation about the axis X.

3. Device according to either of Claims 1 and 2, **characterised in that** the said transmission means (400) comprises a gearwheel (420) intended to co-operate with a pinion (310) of a manual actuating button (300) mounted on the headlamp housing (10) in such a way as to emerge at the outside of the said housing (10).

4. Device according to Claims 2 and 3, **characterised in that** the sleeve (410) and the gearwheel (420) form an integral whole.

5. Device according to one of Claims 1 to 4, **characterised in that** the transmission means (400) is a piece produced from plastic material.

6. Device according to one of Claims 1 to 5, **characterised in that** the said transmission means (400) comprises flexible tongues (401) capable of co-operating with the said actuating rod (100), each tongue (401) being sufficiently flexible to allow the said tongue (400) to move away from the said actuating rod (100) in the case of significant forces and to return elastically onto the said actuating rod (100).

7. Device according to Claim 6, **characterised in that** each flexible tongue (401) extends longitudinally in a direction transverse to the axis X of the actuating rod (100) and, on its inner face intended to come into contact with the actuating rod (100), has a projection (401b) capable of positioning itself in a groove (110) provided in the outer surface of the actuating rod (100).

8. Device according to either of Claims 6 and 7, **characterised in that** each flexible tongue (401) has, on its outer face, a reinforcement (401a) in the form of part of a cylinder.

9. Device according to one of Claims 6 to 8, in its dependence on one of Claims 2 to 5, **characterised in that** the flexible tongues (101) are formed in an end part (411) of the said sleeve (410).

10. Device according to any of the preceding claims, **characterised in that** the automatic displacement means (200) comprises an electric rotary drive motor.

## Patentansprüche

1. Vorrichtung zum Einstellen der Position eines beweglichen Teils eines Kraftfahrzeugscheinwerfers, mit einer Antriebsstange (100) mit einer Achse X, deren eines Ende (101) dazu bestimmt ist, mit dem beweglichen Teil in der Weise verbunden zu sein, dass es sich ungehindert um die Achse X drehen kann, und deren anderes Ende (102) dazu bestimmt ist, mit einem automatischen Verlagerungsmittel (200) verbunden zu sein, und bei der zum einen ein Mittel (300) zum manuellen Drehen der Antriebsstange (100) vorgesehen ist, das auf dem Gehäuse (10) des Scheinwerfers so angebracht ist, dass es von außerhalb des Scheinwerfers zugänglich ist, und zum anderen ein Übertragungsmittel (400), das innen im Gehäuse (10) des Scheinwerfers angeordnet und mit dem manuellen Drehmittel (300) verbunden ist und mit der Antriebsstange (100) zusammenwirkt, um auf diese die Drehbewegung zu übertragen, die von dem manuellen Drehmittel (300) erzeugt wird, und bei der die Antriebsstange (100) in Bezug auf das bewegliche Teil verschiebefest ist,
**dadurch gekennzeichnet, dass** die Antriebsstange (100) ein Ende aufweist, das durch Verschraubung mit einem verschiebefesten, drehenden Ausgang (201) des automatischen Verschiebemittels (200) so zusammenwirkt, dass durch das Versetzen der Antriebsstange in eine Drehbewegung ihre Längsverschiebung entlang der Achse X bewirkt wird.

2. Einstellvorrichtung nach Anspruch 1,
**dadurch gekennzeichnet, dass** das Übertragungsmittel (400) eine entlang der Achse X verlaufende Muffe (410) umfasst, deren eines Ende (411) mit der Antriebsstange (100) in Eingriff kommt und deren anderes Ende (412) auf einem feststehenden Teil (20) des Scheinwerfers so angebracht ist, dass sie verschiebefest und um die Achse X drehbeweglich ist.

3. Vorrichtung nach einem der Ansprüche 1 oder 2,
**dadurch gekennzeichnet, dass** das Übertragungsmittel (400) ein Zahnrad (420) umfasst, das dazu bestimmt ist, mit einem Ritzel (310) eines Handknopfes (300) zusammenzuwirken, der auf dem Gehäuse (10) des Scheinwerfers so angebracht ist, dass er aus dem Gehäuse (10) hervortritt.

4. Vorrichtung nach den Ansprüchen 2 und 3,
**dadurch gekennzeichnet, dass** die Muffe (410) und das Zahnrad (420) eine einstückige Einheit bilden.

5. Vorrichtung nach einem der Ansprüche 1 bis 4,
**dadurch gekennzeichnet, dass** das Übertragungsmittel (400) ein aus Kunststoff gefertigtes Teil ist.

6. Vorrichtung nach einem der Ansprüche 1 bis 5,
**dadurch gekennzeichnet, dass** das Übertragungsmittel (400) elastische Zungen (401) umfasst, die mit der Antriebsstange (100) zusammenzuwirken vermögen, wobei jede Zunge (401) elastisch genug ist, um bei hoher Beanspruchung das Abspreizen der Zunge (401) in Bezug auf die Antriebsstange (100) und ein elastisches Rückstellen der Zunge an die Antriebsstange (100) zu ermöglichen.

7. Vorrichtung nach Anspruch 6,
**dadurch gekennzeichnet, dass** sich jede elastische Zunge (401) in Längsrichtung quer zur Achse X der Antriebsstange (100) erstreckt und an ihrer Innenseite, die dazu bestimmt ist, mit der Antriebsstange (100) in Kontakt zu kommen, einen Vorsprung (401b) aufweist, der sich in einer an der Außenseite der Antriebsstange (100) vorgesehenen Rille (110) zu platzieren vermag.

8. Vorrichtung nach einem der Ansprüche 6 oder 7,
**dadurch gekennzeichnet, dass** jede Zunge (401) an ihrer Außenseite eine Vertiefung (401a) in Form eines Zylinderstücks aufweist.

9. Vorrichtung nach einem der Ansprüche 6 bis 8 in Abhängigkeit von einem der Ansprüche 2 bis 5,
**dadurch gekennzeichnet, dass** die elastischen Zungen (401) an einem Endteil (411) der Muffe (410) ausgebildet sind.

10. Vorrichtung nach einem der vorhergehenden Ansprüche,
**dadurch gekennzeichnet, dass** das automatische Verschiebemittel (200) einen elektrischen Rotationsmotor umfasst.
